# EUROPEAN PATENT SPECIFICATION

(11) **EP 0 688 656 B1**
(45) Date of publication and mention of the grant of the patent: **04.10.2001**
(21) Application number: 95109266.7
(22) Date of filing: 14.06.1995
(51) Int. Cl.: B29C 45/73, B29C 45/27

(54) **Injection molding one-piece insert having cooling chamber with radial rib portions**
Einstückiger Spritzgiesseinsatz mit Radialrippen aufweisender Kühlkammer
Insert de moulage par injection en une seule pièce avec chambre de refroidissement comprenant des nervures radiales

(30) Priority: 21.06.1994 CA 2126431
(43) Date of publication of application: 27.12.1995
(73) Proprietor: Gellert, Jobst Ulrich, Georgetown, Ontario L7G 7X1 (CA)
(72) Inventor: Gellert, Jobst Ulrich, Georgetown, Ontario L7G 7X1 (CA)
(74) Representative: Grünecker, Kinkeldey, Stockmair & Schwanhäusser Anwaltssozietät

(56) References cited:
- EP-A- 0 195 111
- EP-A- 0 361 043
- EP-B- 0 374 549
- DE-A- 3 841 093
- US-A- 2 828 509
- US-A- 4 687 613
- PATENT ABSTRACTS OF JAPAN vol. 17 no. 300 (M-1426) ,8 June 1993 & JP-A-05 024076 (FUJI PHOTO FILM CO LTD)

## Description

This invention relates generally to injection molding gate and cavity inserts.

Inserts which define a portion of the cavity and through which the gate extends to convey melt from a heated nozzle to the cavity are well known. Such inserts having a circular chamber for cooling fluid flowing around the gate are also known.

From prior art document EP-B-374549, an injection molding apparatus comprising an injection molding gate and cavity insert in accordance with the preamble of claim 1 is known. Said insert is mounted between the heated nozzle and the related cavity. The insert comprises an inner portion and an outer portion which are integrally brazed together. Both the inner and the outer portion are made of hot work tool steel. The outer portion of said gate insert has a central opening therethrough which receives the inner portion. The inner surface of the outer portion matches the outer surface of the inner portion, except that the outer surface of the inner portion has a pair of channels extending rearwardly from a circular channel adjacent to the forward end of the inner portion. The inner and outer portions of said insert are integrally joined together with a baffle located in the circular channel between the above-mentioned pair of channels. The circular channel forms a circular cooling fluid passage which extends in said insert around the nose portion of the related nozzle adjacent to the cavity. The above-mentioned channels are constituting cooling fluid inlet and outlet means being provided close to each other at the outside of the insert. Said circular cooling fluid channel is used to convey cooling fluid from said cooling fluid inlet around the gate to the cooling fluid outlet. At a front surface of said insert a cavity wall portion is provided which extends between said cooling fluid channel and the cavity, wherein said front surface forms a substantially flat part of the cavity.

Furthermore, from prior art document US-A-4 687 613 a heated injected molding nozzle formed as a one-piece element is known. Said nozzle comprises a runner formed in a cylinder therefrom communicating with a gate for supplying synthetic resin into a cavity. Said nozzle also comprises a front surface which partly forms a flat surface of said cavity. Furthermore, an annular cooling channel surrounding said gate is provided within said nozzle. Said annular cooling channel is connected to an inflow passage and an outflow passage for supplying a cooling medium for cooling said gate. The injection cycle of said nozzle is controlled by a cooperation of the gate cooling means with an electrical heating means also provided in said nozzle by means of cooling down the resin within the gate for closing the same and heating up said resin for opening said gate. Thus, the annular cooling channel, which is restricted at the area of the gate, is a part of the injection cycle controlling means, and said one-piece nozzle means does not need to be provided with the valve member for opening and closing the gate within a predetermined injection cycle.

From prior art document EP-A- 195111 (US-A-4 622 001) an injection molding apparatus with a two-element cavity member is known. Said member comprises a cavity element and a cap. Said member is mounted between a nozzle and a cavity. A rear surface of the cap is provided with a recessed portion to receive a related nozzle. Said cavity element comprises an inner surface which completely forms the outside part of the cavity. A gate extends centrally through said member from the rear surface to the front surface to convey melt into the cavity. Within said cap two tortuous cooling channels are formed being substantially within a plane which is perpendicular to the longitudinal axis of said member. Said cooling channels are respectively connected to cooling fluid inlet means and cooling fluid outlet means and extend inwardly from a cylindrical portion of the cap. Said channels further include pockets located close to the related gate means and are formed by tortuous slots provided within said cap. Said slots are defined by lands extending from the cap and abut the cavity element.

In most injection molding applications, the cost effectiveness of multi-cavity molding has made compact size a very important factor. While rapid cooling of the melt is important to reduce cycle time, higher injection pressures in the cavity have also made structural strength of the mold an increasingly important consideration. This is particularly true for molding polyethylene terephthalate (PET) preforms for beverage bottles which require large multi-cavity systems with short cycle times to be competitive. Of course, cooled gate and cavity inserts have the problem that increasing the size of the cooling fluid chamber to provide more cooling results in a loss of structural strength to withstand the injection and sealing pressure in the cavity. Furthermore, the thicker the cavity wall around the gate, the more insulation it provides and thus the more cooling that must be provided by the cooling fluid. Thus, all of the previous gate and cavity inserts have the disadvantage that the combination of melt cooling and structural strength they provide is insufficient for some applications such as molding PET bottle preforms.

It is an objective of the present invention to provide an injection molding gate and cavity insert providing an improved cooling property which is compact in size and provides improved cost effectiveness.

According to the present invention said objective is solved by an injection molding gate and cavity insert having the features of independent claim 1.

It is a special advantage of the present invention to provide an injection molding cooled gate and cavity insert having an improved combination of melt cooling and structural strength.

Hereinafter, the present invention is illustrated and explained by means of a preferred in embodiment in conjunction with the accompanying drawings. In the drawings wherein:
Figure 1 is a sectional view of a portion of a multi-cavity injection molding system showing a gate and cavity insert according to a preferred embodiment,
Figure 2 is an exploded isometric view showing how the insert is made,
Figure 3 is a partially cut-away view of the insert showing one of the flow passages for the cooling fluid,
Figure 4 is a similar view from a different angle showing a portion of both of the flow passages, and
Figure 5 is a sectional view along line 5-5 in Figure 3.

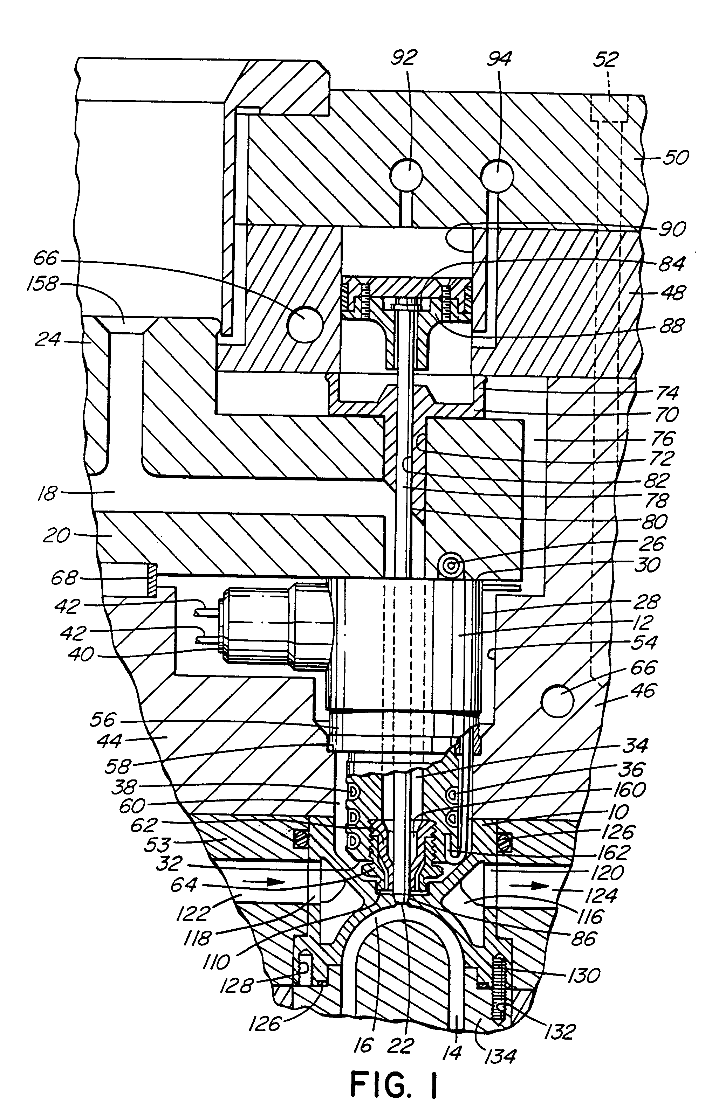

Reference is first made to Figure 1 which shows a portion of a multi-cavity valve gated injection molding system or apparatus having a gate and cavity insert 10 according to the preferred embodiment mounted between a heated nozzle 12 and a cavity 14. The cavity 14 has a convex portion 16 which is partially formed by the gate and cavity insert 10 and in this embodiment is for molding PET preforms from which beverage bottles are made by stretch blow molding. A melt passage 18 branches in a steel melt distribution manifold 20 to the different steel nozzles 12 to convey pressurized melt to each gate 22 extending through the gate and cavity insert 10 to a respective cavity 14. The melt distribution manifold 20 has a cylindrical inlet portion 24 and is heated by an integral electrical heating element 26.

Each nozzle 12 has an outer surface 28, a rear end 30, a front end 32, and a central melt bore 34 extending from the rear end 30 to the front end 32. The nozzle 12 is heated by an integral electrical heating element 36 which has a spiral portion 38 extending around the melt bore 34 and an external terminal 40 to which electrical leads 42 from a power source are connected. While the mold 44 usually has a greater number of plates depending upon the application, in this case a manifold retainer plate 46, a cylinder plate 48 and a back plate 50 which are secured together by bolts 52, as well as a cavity retainer plate 53, are shown for ease of illustration. The nozzle 12 is seated in a generally cylindrical opening 54 in the manifold retainer plate 46 by a circular locating flange 56 which sits on a circular shoulder 58 in the opening 54 to accurately locate the nozzle 12 with its central bore 34 in alignment with the gate 22 extending through the insert 10 to the cavity 14. This provides an insulative air space 60 between the nozzle 12 and the surrounding manifold retainer plate 46 and the insert 10. In this configuration, a removable two-piece nozzle seal 62 is screwed into a threaded seat 64 in the front end 32 of the nozzle 12 to bridge the insulative air space 60 around the gate 22. The mold 44 is cooled by pumping cooling water through cooling conduits 66 extending in the manifold retainer plate 46 and cylinder plate 48. The distribution manifold 20 is mounted between the manifold retainer plate 46 and the cylinder plate 48 by a central locating ring 68 and valve sealing bushings 70. Each valve sealing bushing 70 is seated in an opening 72 through the manifold 20 in alignment with a nozzle 12 and has a flanged portion 74 which bears against the cylinder plate 48. Thus, another insulative air space 76 is provided between the heated manifold 20 and the surrounding cooled manifold retainer plate 46 and cylinder plate 48 to provide thermal separation between the heated manifold 20 and the surrounding cooled mold 44.

An elongated valve member 78 with a cylindrical outer surface 80 extends through a bore 82 in the valve sealing bushing 70 and centrally into the melt passage 18 and the aligned central melt bore 34 through the nozzle 12. The valve member 78 has an enlarged rear end 84 and a tapered tip 86 which is received in the gate 22 in the closed position. The rear end 84 of the valve member 78 is connected to pneumatic actuating mechanism which includes a piston 88 seated in a cylinder bore 90 in a cylinder plate 48. Controlled air pressure is applied to opposite sides of the piston 88 through air ducts 92, 94 extending through the back plate 50 to reciprocate the valve member 78 between a retracted open position and the forward closed position shown in which its tapered tip 86 is received in the gate 22 in the gate and cavity insert 10. While a pneumatic actuating mechanism is shown for ease of illustration, of course, hydraulic actuating mechanisms are used for many applications.

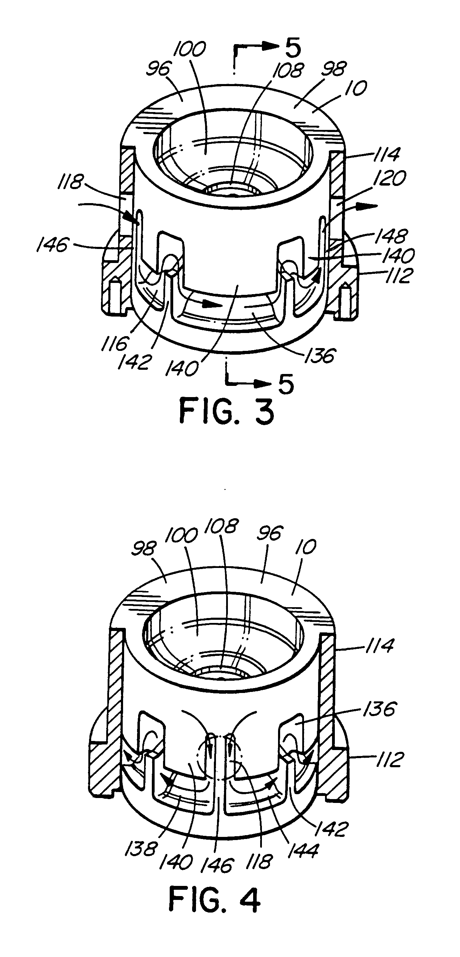

Referring also to Figures 3-5, the gate and cavity insert 10 according to the invention will now be described in detail. The gate and cavity insert 10 has a rear end 96 with a rear surface 98 having a recessed portion 100 and a front end 102 with a front surface 104 having a recessed portion 106 which partially forms the convex portion 16 of the cavity 14. The recessed portion 100 of the rear end 98 has a central seat 108 from which the tapered gate 22 extends to the cavity 14 and in which the front end 110 of the two-piece nozzle seal 62 is received. The gate and cavity insert 10 has an outer surface 112 with a generally cylindrical portion 114 extending from the rear end 96. The gate and cavity insert 10 has a cooling fluid chamber 116 which is generally circular except for the rib portions described below, and extends around the gate 22 from a cooling fluid inlet 118 to a cooling fluid outlet 120 which is opposite to the cooling fluid inlet 118. The cooling fluid inlet 118 and cooling fluid outlet 120 extend from the cylindrical portion 114 of the outer surface 112 of the gate and cavity insert 10 in alignment respectively with cooling fluid inlet and outlet conduits 122, 124 extending through the cavity retainer plate 53. Rubber O-rings 126 extend around the gate and cavity insert 10 to prevent leakage of the cooling fluid. The front end 102 of the gate and cavity insert 10 has several threaded holes 128 for removal of the insert 10, one of which receives an anti-rotation pin 130 which extends into a matching hole 132 in the cavity insert 134.

Reference is now made particularly to Figures 3 and 4 in describing how a pair of tortuous passages 136, 138 are formed for the cooling fluid flowing each way around the cooling fluid chamber 116 from the inlet 118 to the outlet 120. As can be seen, the gate and cavity insert 10 has a number of first radially extending rib portions 140 projecting frontwardly into the chamber 116 and a number of second radially extending rib portions 142 projecting rearwardly into the chamber 116. The frontwardly projecting rib portions 140 alternate with and are sufficiently spaced from the rearwardly projecting rib portions 142 to form the tortuous passages 136, 138 between them for the cooling fluid to flow around the insert 10 between the cooling fluid inlet 118 and outlet 120. In addition to providing more cooling because of turbulent flow of the cooling fluid around them and their increased surface area, these radially extending rib portions 136, 138 also substantially increase the strength of the insert 10 to withstand injection pressure in the cavity 14. As best seen in Figure 5, this allows the cavity wall portion 144 between the cooling fluid passages 136, 138 and the cavity 14 to be made as thin as possible to withstand the injection pressure which further improves the cooling effect by the cooling fluid on the melt in the cavity 14. In this embodiment, the frontwardly extending rib portions 140 are much wider than the rearwardly extending rib portions 142 to extend the length of flow along the thin cavity wall portion 144 to optimize the combination of cooling and strength provided by the use of the rib portions 140, 142.

In this embodiment, a third thin rib portion 146 extends longitudinally across the cooling fluid chamber 116 in alignment with the cooling fluid inlet 118. Similarly, a fourth thin rib portion 148 extends longitudinally across the cooling fluid chamber 116 in alignment with the cooling fluid outlet 120. The third and fourth rib portions 146, 148 are substantially narrower in width than the diameter of the inlet 118 and outlet 120. In addition to dividing the flow of cooling fluid through the pair of tortuous passages 136, 138 opposite ways around the insert 10, these radially extending rib portions 146, 148 similarly provide the insert 10 with additional strength to withstand repeated injection pressure in the cavity 14. As can be seen, the section in Figure 1 is slightly off center so that these rib portions 146, 148 are not seen in order to clarify how the cooling fluid flows in through the inlet 118 and out through the outlet 120.

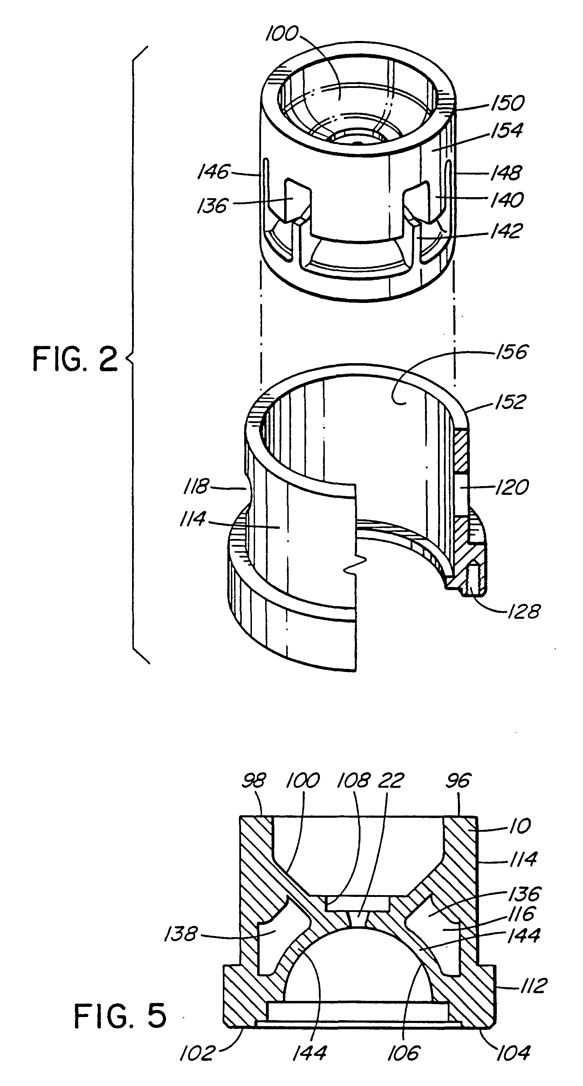

Reference will now be made particularly to Figure 2 in describing how the gate and cavity insert 10 according to the invention is made. First, an inner component 150 and an outer component 152 are machined of suitable materials to fit together. The outer component 152 is normally made of a suitable steel such as H13 or stainless steel and the inner component is preferably made of a beryllium-nickel alloy which is more conductive and corrosion resistant than steel. As can be seen, the inner component 150 has the rib portions 140, 142 extending frontwardly and rearwardly to form the tortuous cooling fluid passages 136, 138 therebetween, and also the third and fourth thin rib portions 146, 148. The outer component 152 has the cooling fluid inlet 118 extending therethrough opposite to the cooling fluid outlet 120. The inner component 150 is then inserted into the outer component 152 with the third rib portion 146 aligned with the cooling fluid inlet 118 and the fourth rib portion 148 aligned with the cooling fluid outlet 120. After being tack welded in this alignment, a nickel alloy paste is applied along the joints between them and they are gradually heated in a vacuum furnace to a temperature of approximately 1052°C (1925°F) which is above the melting temperature of the nickel alloy. As the furnace is heated, it is evacuated to a relatively high vacuum to remove substantially all of the oxygen and then partially backfilled with an inert gas such as argon or nitrogen. When the melting point of the nickel alloy is reached, it melts and flows between the outer surface 154 of the inner component 150 and the inner surface 156 of the outer component 152. These surfaces 154, 156 are roughened or blasted with nickel shot and the nickel alloy spreads between them by capillary action to integrally braze the two components 150, 152 together to form the one-piece gate and cavity insert 10. Brazing them together this way in a vacuum furnace provides a metallurgical bonding of the nickel alloy to the steel to maximize the strength of the insert and prevent leakage of cooling water.

In use, the injection molding system is assembled as shown in Figure 1. While only a single cavity 14 has been shown for ease of illustration, it will be appreciated that the melt distribution manifold 20 normally has many more melt passage branches extending to numerous cavities 14 depending on the application. Electrical power is applied to the heating element 26 in the manifold 20 and to the heating elements 36 in the nozzles 12 to heat them to a predetermined operating temperature. Water or other suitable cooling fluid at predetermined temperatures is supplied to the cooling conduits 66 and 122 to cool the mold 44 and the gate and cavity insert 10. Hot pressurized melt is then injected from a molding machine (not shown) into the melt passage 18 through the central inlet 158 according to a predetermined cycle in a conventional manner. The melt passage branches outward in the manifold 20 to each nozzle 12 where it extends through the central bore 34 and then through the aligned opening 160 in the two-piece seal 62 to the respective gate 22. In this embodiment, controlled pneumatic pressure is applied to the cylinders 90 through air ducts 92, 94 to control actuation of the pistons 88 and valve members 78 according to a predetermined cycle in a conventional manner. When the valve members 78 are in the retracted open position, the pressurized melt flows through the melt passage 18 and the gates 22 until the cavities 14 are full. When the cavities 14 are full, injection pressure is held momentarily to pack. The pneumatic pressure is then reversed to reciprocate the valve members 78 to the forward closed position in which the tip 86 of each of the valve members 78 is seated in one of the gates 22. The injection pressure is then released and, after a short cooling period, the mold 44 is opened for ejection. After ejection, the mold 44 is closed, pneumatic pressure is applied to retract the valve members 78 to the open position and melt injection pressure is reapplied to refill the cavities 14. This cycle is repeated continuously with a frequency depending upon the number and size of the cavities and the type of material being molded. The operating temperature is monitored by a thermocouple element 162 which extends into the front end 32 of the nozzle 12.

While the description of the injection molding apparatus according to the invention has been given with respect to a preferred embodiment, it will be evident that various other modifications are possible without departing from the scope of the invention as understood by those skilled in the art and as defined in the following claims.

## Claims

1. Injection molding one-piece gate and cavity insert (10) to be mounted in a mold between a heated nozzle (12) and a cavity (14), the gate and cavity insert comprising an outer surface (112) having a generally cylindrical portion (114), a rear surface (98) with a recessed portion (100), a front surface (104) which partially forms the cavity (14), a gate (22) extending centrally therethrough from the rear surface (98) to the front surface (104) to convey melt from the nozzle (12) to the cavity (14), a cooling fluid inlet (118) and a cooling fluid outlet (120) extending inwardly from said cylindrical portion (114), a cooling fluid passage extending in the gate and cavity insert (10) to convey cooling fluid from the cooling fluid inlet (118) around the gate (22) to the cooling fluid outlet (120), a cavity wall portion (144) which extends between the cooling fluid passage and the cavity (14) has a predetermined thickness, **characterized in that** said passage is a chamber (116) wherein a plurality of rib portions (140, 142) are projecting to provide turbulent flow of the cooling fluid within said cooling fluid chamber (116), and said front surface (104) of the gate and cavity insert (10) has a recessed portion (106) to partially form a convex portion (16) of the cavity (14).

2. Injection molding gate and cavity insert according to claim 1, wherein said cooling fluid inlet (118) and said cooling fluid outlet means (120) are located at said cylindrical portion (114) opposite to each other, said plurality of rib portions (140, 142) projecting into said cooling fluid chamber (116) are forming a pair of tortuous passages (136,138) to provide turbulent cooling fluid flow from the cooling fluid inlet (118) both ways around the gate (22) to the cooling fluid outlet (120).

3. Injection molding gate and cavity insert according to one of the claims 1 to 2, wherein said plurality of rib portions comprises a plurality of first radially extending rib portions (140) projecting frontwardly into said cooling fluid chamber (116) and a plurality of second radially extending rib portions (142) projecting rearwardly from the cavity wall portion (144) into said cooling fluid chamber (116), wherein the first frontwardly extending rib portions (140) alternating with and being sufficiently spaced from the second rearwardly extending rib portions (142) to provide said pair of tortuous passages (136,138).

4. Injection molding gate and cavity insert according to claim 3, wherein the first frontwardly extending rib portions (140) are substantially wider than the second rearwardly extending rib portions (142) to provide an optimum combination of flow of cooling fluid adjacent the cavity wall portion (144) and structural strength from the first and second ribs.

5. Injection molding gate and cavity insert according to one of the claims 2 to 4, wherein a third rib portion (146) having a predetermined width extends longitudinally across the cooling fluid chamber (116) in alignment with the cooling fluid inlet (118), the cooling fluid inlet (118) being of a diameter substantially greater than the width of the third rib portion (116), whereby cooling fluid flowing inwardly through the cooling fluid inlet (118) divides at the third rib portion (110) and flows both ways through the tortuous passages (136,138) around the gate (22).

6. Injection molding gate and cavity insert according to one of the claims 2 to 5, wherein a fourth thin rib portion (148) having a predetermined width extends longitudinally across the cooling fluid chamber (116) in alignment with the cooling fluid outlet (120), the cooling fluid outlet (120) being of a diameter substantially greater than the width of the fourth rib portion (148), whereby the cooling fluid flowing both ways through the tortuous passages (136,138) combine past the fourth rib portion (148) and flow outwardly through the cooling fluid outlet (120).

7. Injection molding gate and cavity insert according to one of the claims 1 to 6, wherein the predetermined thickness of the cavity wall portion (144) between the cooling fluid tortuous passages (136,138) and the cavity (14) is as thin as possible to withstand injection pressure of the melt in the cavity.

8. Injection molding gate and cavity insert according to one of the claims 1 to 7, wherein the gate and cavity insert has an inner component (150) being made of a beryllium-nickel alloy and an outer component (152) being made of steel.

9. Injection molding gate and cavity insert according to claim 8, wherein the inner component (150) and an outer component (152) are integrally brazed together to form the one-piece gate and cavity insert (10).

## Patentansprüche

1. Spritzgießanschnitt- und -Formhohlraumeinsatz (10) zur Montage in einer Form zwischen einer beheizten Düse (12) und einem Formhohlraum (14), wobei der Anschnitt- und Formhohlraumeinsatz aufweist eine Außenoberfläche (112) die einen im wesentlichen zylindrischen Abschnitt (114), eine hintere Oberfläche (98) mit einem ausgesparten Abschnitt (100), eine vordere Oberfläche (104), die teilweise den Formhohlraum (14) bildet, einen Anschnitt (22), der sich mittig durch diesen hindurch von der hinteren Oberfläche (98) zu der vorderen Oberfläche (104) erstreckt, um Schmelze von der Düse (12) zu dem Formhohlraum (14) zu leiten, einen Kühlfluideinlaß (118) und einen Kühlfluidauslaß (120) aufweist, die sich von dem zylindrischen Abschnitt (114) nach einwärts erstrecken, einen Kühlfluidkanal, der sich in dem Anschnitt- und Formhohlraumeinsatz (10) erstreckt, um Kühlfluid von dem Kühlfluideinlaß (118) rund um den Anschnitt (22) zu dem Kühlfluidauslaß (120) zu befördern, einen Formhohlraum-Wandabschnitt (144), der sich zwischen dem Kühlfluidkanal und dem Formhohlraum (14) erstreckt und der eine vorgegebene Dicke aufweist, enthält, **dadurch gekennzeichnet, daß** der Kanal eine Kammer (116) ist, in die eine Mehrzahl von Rippenabschnitten (140, 142) vorspringen, um eine turbulente Strömung des Kühlfluides innerhalb der Kühlfluidkammer (116) zu schaffen und **daß** die vordere Oberfläche (104) des Anschnitt- und Formhohlraum-Einsatzes (10) einen ausgesparten Abschnitt (106) aufweist, um teilweise einen konvexen Abschnitt (16) des Formhohlraumes (14) zu bilden.

2. Spritzgießanschnitt- und -Formhohlraumeinsatz nach Anspruch 1, bei dem die Kühlfluideinlaß- und die Kühlfluidauslaßeinrichtung (118, 120) an dem zylindrischen Abschnitt (114) einander gegenüberliegend angeordnet sind, wobei die mehreren Rippenabschnitte (140, 142), die in die Kühlfluidkammer (116) vorspringen, ein Paar gewundene Kanäle (136, 138) bilden, um eine turbulente Kühlfluidströmung von dem Kühlfluideinlaß (118) in beiden Richtungen rund um den Anschnitt (22) zu dem Kühlfluidauslaß (120) zu schaffen.

3. Spritzgießanschnitt- und -Formhohlraumeinsatz nach einem der Ansprüche 1 bis 2, bei dem die Mehrzahl der Rippenabschnitte aufweist eine Mehrzahl erster, sich radial erstreckender Rippenabschnitte (140), die nach vom in die Kühlfluidkammer (116) vorspringen, und eine Mehrzahl von zweiten, sich radial erstreckenden Rippenabschnitten (142), die nach hinten von dem Formhohlraum-Wandabschnitt (144) in die Kühlfluidkammer (116) vorspringen, wobei die ersten, sich nach vom erstreckenden Rippenabschnitte (140) altemierend und ausreichend beabstandet von den zweiten, sich nach hinten erstreckenden Rippenabschnitten (142) vorgesehen sind, um ein Paar von gewundenen Kanälen (136, 138) zu schaffen.

4. Spritzgießanschnitt- und -Formhohlraumeinsatz nach Anspruch 3, bei dem die ersten, sich nach vom erstreckenden Rippenabschnitte (140) wesentlich breiter sind als die zweiten, sich nach hinten erstreckenden Rippenabschnitte (142), um eine optimale Kombination an Strömung von Kühlfluid benachbart zu dem Formhohlraum-Wandabschnitt (144) und aus struktureller Festigkeit, basierend auf den ersten und zweiten Rippen, zu bilden.

5. Spritzgießanschnitt- und -Formhohlraumeinsatz nach einem der Ansprüche 2 bis 4, bei dem ein dritter Rippenabschnitt (146), der eine vorgegebene Breite aufweist, sich in Längsrichtung durch die Kühlfluidkammer (116) in Ausrichtung mit dem Kühlfluideinlaß (118) erstreckt, der Kühlfluideinlaß (118) von einem Durchmesser ist, der wesentlich größer ist als die Breite des dritten Rippenabschnittes (116), wodurch das Kühlfluid, das nach einwärts durch den Kühlfluideinlaß (118) strömt, sich an dem dritten Rippenabschnitt (110) teilt und in beide Richtungen durch die gewundenen Kanäle (136, 138) rund um den Anschnitt (22) strömt.

6. Spritzgießanschnitt- und -Formhohlraumeinsatz nach einem der Ansprüche 2 bis 5, bei dem ein vierter dünner Rippenabschnitt (148), der eine vorgegebene Breite aufweist, sich in Längsrichtung durch die Kühlfluidkammer (116) in Ausrichtung mit dem Kühlfluidauslaß (120) erstreckt, wobei der Kühlfluidauslaß (120) von einem Durchmesser ist, der wesentlich größer ist als die Breite des vierten Rippenabschnittes (148), wodurch das Kühlfluid in beide Richtungen durch die gewundenen Kanäle (136, 138) strömt, hinter dem vierten Rippenabschnitt (148) wieder zusammengeführt wird und nach außen durch den Kühlfluidauslaß (120) strömt.

7. Spritzgießanschnitt- und -Formhohlraumeinsatz nach einem der Ansprüche 1 bis 6, bei dem die vorgegebene Dicke des Formhohlraum-Wandabschnittes (144) zwischen den gewundenen Kanälen (136, 138) des Kühlfluides und dem Formhohlraum (14) so dünn wie möglich ist, um dem Einspritzdruck der Schmelze in dem Formhohlraum zu widerstehen.

8. Spritzgießanschnitt- und -Formhohlraumeinsatz nach einem der Ansprüche 1 bis 7, bei dem der Anschnitt- und Formhohlraumeinsatz ein Innenteil (150) aus einer Beryllium-Nickel-Legierung und ein Außenteil (152) aus Stahl aufweist.

9. Spritzgießanschnitt- und -Formhohlraumeinsatz nach Anspruch 8, bei dem das Innenteil (150) und das Außenteil (152) integral einstückig miteinander hartverlötet sind, um einen einstückigen Anschnitt- und Formhohlraumeinsatz (10) zu bilden.

## Revendications

1. Attaque de coulée et insert à cavité de moulage par injection en une seule pièce (10) à monter dans un moule entre une tuyère chauffée (12) et une cavité (14), l'attaque de coulée et l'insert à cavité comprenant une surface externe (112) qui a une partie d'une manière générale cylindrique (114), une surface arrière (98) avec une partie évidée (100), une surface avant (104) qui forme partiellement la cavité (14), une attaque de coulée (22) qui s'étend au centre et d'un bout à l'autre depuis la surface arrière (98) jusqu'à la surface avant (104) pour transmettre le produit en fusion de la tuyère (12) à la cavité (14), une entrée de liquide de refroidissement (118) et une sortie de liquide de refroidissement (120) qui s'étendent vers l'intérieur depuis ladite partie cylindrique (114), un passage de liquide de refroidissement qui s'étend dans l'attaque de coulée et l'insert à cavité (10) pour transmettre le liquide de refroidissement de l'entrée de liquide de refroidissement (118) autour de l'attaque de coulée (22) à la sortie de liquide de refroidissement (120), une partie formant paroi à cavité (144) qui s'étend entre le passage de liquide de refroidissement et la cavité (14) a une épaisseur prédéterminée, **caractérisés en ce que** ledit passage est une chambre (116) dans laquelle une pluralité de parties formant nervures (140, 142) font saillie pour fournir un écoulement turbulent du liquide de refroidissement à l'intérieur de ladite chambre de liquide de refroidissement (116), et ladite surface avant (104) de l'attaque de coulée et de l'insert à cavité (10) a une partie évidée (106) pour former partiellement une partie convexe (16) de la cavité (14).

2. Attaque de coulée et insert à cavité de moulage par injection selon la revendication 1, dans lesquels ladite entrée de liquide de refroidissement (118) et lesdits moyens formant sortie du liquide de refroidissement (120) sont situés sur ladite partie cylindrique (114) en face les uns des autres, ladite pluralité de parties formant nervures (140, 142) faisant saillie dans ladite chambre de liquide de refroidissement (116) forment deux passages tortueux (136, 138) pour fournir un écoulement de liquide de refroidissement turbulent à partir de l'entrée de liquide de refroidissement (118), les deux voies autour de l'attaque de coulée (22) menant à la sortie de liquide de refroidissement (120).

3. Attaque de coulée et insert à cavité de moulage selon l'une des revendications 1 à 2, dans lesquels ladite pluralité de parties formant nervures comprend une pluralité de premières parties formant nervures (140) s'étendant radialement qui font saillie en avant dans ladite chambre de liquide de refroidissement (116) et une pluralité de deuxièmes parties formant nervures (142) s'étendant radialement qui font saillie en arrière depuis la partie formant paroi de cavité (144) dans ladite chambre de liquide de refroidissement (116), dans lesquels les premières parties formant nervures (140) s'étendant en avant alternent avec, et sont suffisamment espacées des deuxièmes parties formant nervures (142) s'étendant en arrière pour fournir ladite paire de passages tortueux (136, 138).

4. Attaque de coulée et insert à cavité de moulage par injection selon la revendication 3, dans lesquels les premières parties formant nervures (140) s'étendant en avant sont sensiblement plus larges que les deuxièmes parties formant nervures (142) s'étendant en arrière pour fournir une combinaison optimale d'écoulement du liquide de refroidissement d'une manière adjacente à la partie formant paroi de cavité (144) et une résistance structurelle à partir des premières et deuxièmes nervures.

5. Attaque de coulée et insert à cavité selon l'une des revendications 2 à 4, dans lesquels une troisième partie formant nervure (146), ayant une largeur prédéterminée, s'étend longitudinalement à travers la chambre de liquide de refroidissement (116) en alignement avec l'entrée de liquide de refroidissement (118), l'entrée de liquide de refroidissement (118) étant d'un diamètre sensiblement plus grand que la largeur de la troisième partie formant nervure (116), de ce fait le liquide de refroidissement s'écoulant à l'intérieur par l'entrée de liquide de refroidissement (118) se divise au niveau de la troisième partie formant nervure (146) et s'écoule dans les deux voies par les passages tortueux (136, 138) autour de l'attaque de coulée (22).

6. Attaque de coulée et insert à cavité de moulage par injection selon l'une des revendications 2 à 5, dans lesquels une quatrième partie formant nervure mince (148) ayant une largeur prédéterminée qui s'étend longitudinalement à travers la chambre de liquide de refroidissement (116) en alignement avec la sortie de liquide de refroidissement (120), la sortie de liquide de refroidissement (120) étant d'un diamètre sensiblement plus grand que la largeur de la quatrième partie formant nervure (148), de ce fait le liquide de refroidissement s'écoulant dans les deux voies à travers les passages tortueux (136, 138) se réunit au-delà de la quatrième partie formant nervure (148) et s'écoule à l'extérieur par la sortie de liquide de refroidissement (120).

7. Attaque de coulée et insert à cavité de moulage par injection selon l'une des revendications 1 à 6, dans lesquels l'épaisseur prédéterminée de la partie formant paroi de cavité (144) entre les passages tortueux du liquide de refroidissement (136, 138) et la cavité (14) est aussi mince que possible pour supporter la pression d'injection du produit en fusion dans la cavité.

8. Attaque de coulée et insert à cavité de moulage par injection selon l'une des revendications 1 à 7, dans lesquels l'attaque de coulée et l'insert à cavité possèdent un composant interne (150) fabriqué dans un alliage béryllium-nickel et un composant externe (152) qui est réalisé en acier.

9. Attaque de coulée et insert à cavité de moulage par injection selon la revendication 8, dans lesquels le composant interne (150) et un composant externe (152) sont brasés d'une seule pièce ensemble pour former l'attaque de coulée et l'insert à cavité d'une seule pièce (10).
